# EUROPEAN PATENT SPECIFICATION

(11) **EP 1 679 636 B1**
(45) Date of publication and mention of the grant of the patent: **16.07.2008**
(21) Application number: 05104584.7
(22) Date of filing: 27.05.2005
(51) Int. Cl.: G06K 7/08, G06K 7/00

(54) **Refrigerator with a reader for RFID tags**
Kühlschrank mit einem Leser für RFID-Tags
Réfrigérateur avec un lecteur pour des étiquettes d'identification radio fréquence

(30) Priority: 03.01.2005 KR 2005000289
(43) Date of publication of application: 12.07.2006
(73) Proprietor: SAMSUNG ELECTRONICS CO., LTD., Suwon-si, Gyeonggi-Do 442-742 (KR)
(72) Inventor: Son, Chang Ho, Suwon-si Gyeonggi-do (KR); Kim, Hoon, Yeongton-Gu Gyeonggi-Do (KR); Jung, Woon Sung, Suwon-Si Gyeonggi-Do (KR); Park, You Na, Seoul (KR); Lee, Hye Rim, Suwon-Si Gyeonggi-Do (KR)
(74) Representative: Geary, Stuart Lloyd

(56) References cited:
- EP-A- 1 331 590
- DE-U1- 29 912 346
- US-A1- 2002 183 882
- FINKENZELLER, KLAUS: "RFID-Handbuch" 26 September 2002 (2002-09-26), CARL HANSER VERLAG , MÜNCHEN WIEN , XP002342001 ISBN: 3-446-22071-2 * pages 67,68 *
- PATENT ABSTRACTS OF JAPAN vol. 2002, no. 07, 3 July 2002 (2002-07-03) & JP 2002 081848 A (TOSHIBA CORP), 22 March 2002 (2002-03-22)

## Description

The present invention relates to a refrigerator comprising a storage chamber and electromagnetic tag reading means for reading tags in the storage chamber, the tag reading means comprising a plurality of antennas.

JP-A-2002-81848 discloses a method of obtaining information, such as the names, kinds and locations of goods stored in a storage chamber of a refrigerator.
According to the method disclosed in the JP-A-2002-81848, goods stored in the storage chamber of the refrigerator are easily identified and they can be located. To this end, antennas are mounted in storage cells of the storage chamber for locating goods stored therein.

In the refrigerator disclosed in JP-A-2002-81848, at least two antennas are mounted in each of the storage cells of the storage chamber. Specifically, one antenna is mounted to each divider, by which the storage cells are divided from each other, and the other antenna is mounted to any one side of each storage cell for locating the goods. In other words, two antennas are necessary for each storage cell as described above. Consequently, when the number of the storage cells is four, as in JP-A-2002-81848, at least eight antennas are necessary.

As the number of antennas increases, the number of wires used to electrically connect to the antennas also increases and the space required for the antennas also increases. As a result, the size of the refrigerator needs to be increased or the capacity of the storage chamber decreased. Furthermore, it is necessary to consider the space required for the antennas when the design of the refrigerator is changed. Consequently, changing the design of the refrigerator is complicated, which increases the manufacturing costs of the refrigerator

United States Patent Application No. US 2002/0183882 describes a method of providing product location information to a customer via RF communication.

German Utility Model DE 29912346 describes a freezer which uses a transponder to read information from codes on products stored within the freezer.

A refrigerator, according to the present invention, is characterised in that the antennas are collocated and have different, but overlapping operative ranges.

The tag reading means may be an RFID tag reading means.

The tag reading means is configured to subtract data obtained from a shorter range antenna from the data obtained from a longer range antenna so as to isolate data from a zone spaced from the antennas. It is to be understood that this is a "set subtraction" operation not arithmetic subtraction.

Preferably, the antennas are concentrically arranged coil or loop antennas, which may be circular, rectangular or some other polygonal shape, the outer antenna having the longest range and the inner antenna having the shortest range.

Preferably, the antennas are mounted behind a wall surface of the storage chamber by a distance such that listing the antennas in order the magnitudes of their magnetic field strengths at the same place, produces the same result wherever the magnetic field strengths are measured in the storage chamber. In other word, if the magnetic field strength caused by each antenna are measured at the same point in the storage chamber and the antennas then listed in order of the magnitudes of their magnetic fields, the antennas will be in the same order in the list where the measurements are taken.

According to a further aspect of the present invention, there is provided a method of acquiring information from tags in a storage chamber of a refrigerator according to claim 11.

Additional preferred and optional features of the present invention are set forth in the dependent claims.

Embodiments of the present invention will now be described, by way of example, with reference to the accompanying drawings, in which:
Figure 1 is a block diagram illustrating the control system of a refrigerator according to the present invention;
Figure 2 is a view illustrating the installation of the antennas of the refrigerator in Figure 1;
Figure 3 is a graph illustrating magnetic field strengths against distances from antenna in a radio frequency identification (RFID) system;
Figure 4 is a table illustrating the relationships between the identification ranges of the antennas and the storage cells in the refrigerator in Figure 1;
Figure 5 is a flowchart illustrating a method of controlling a refrigerator according to the present invention; and
Figure 6 is a view illustrating an alternative installation of antennas in a refrigerator according to the present invention.

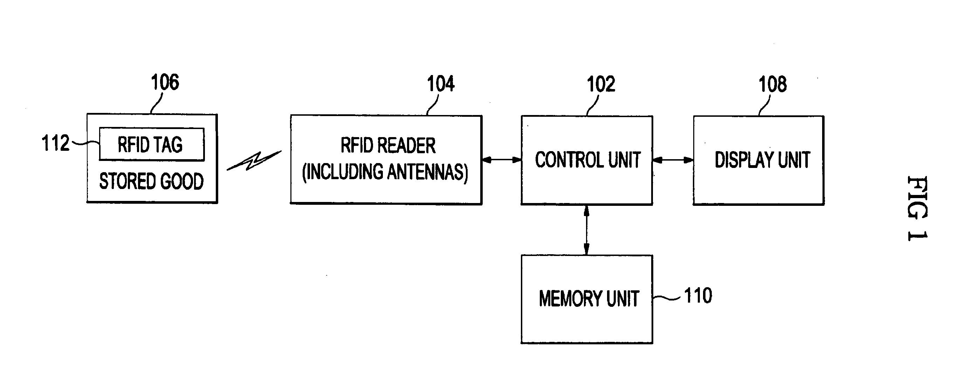

Referring to Figure 1, a radio frequency ID (RFID) reader 104 is connected to the input of a control unit 102, that controls operation of the refrigerator. The RFID reader 104 includes antennas for receiving radio frequency (RF) signals.

An RFID tag 112 is attached to each item 106 stored in a storage chamber of the refrigerator. The RFID tags 112 contains information, such as, by way of nonlimiting examples, the name, the kind, the storage date and the expiration date, about the items 106 to which they are attached. The RFID reader 104 reads an RFID tag 112 by transmitting an RF signal to the RFID tag 112 and receiving another RF signal from the RFID tag 112 for identifying the item 106 and obtaining the relevant information.

The information about the item 106 obtained from the RFID tag 112 is transmitted to the control unit 102, which stores the information about the item 106 in a memory unit 110. The control unit 102 outputs the information about the item 106 as necessary to a display unit 108, which is electrically connected to the output of the control unit 102, so that a user can see the information about the item 106. The display unit 108 displays not only basic information about the items 106, stored in the storage chamber, but also the current locations of the items 106. The locations of the items 106 are displayed according to whether the item 106 is stored in a chilling chamber of the refrigerator or in a freezing chamber of the refrigerator, and in which storage cells the items 106 in the chilling chamber.

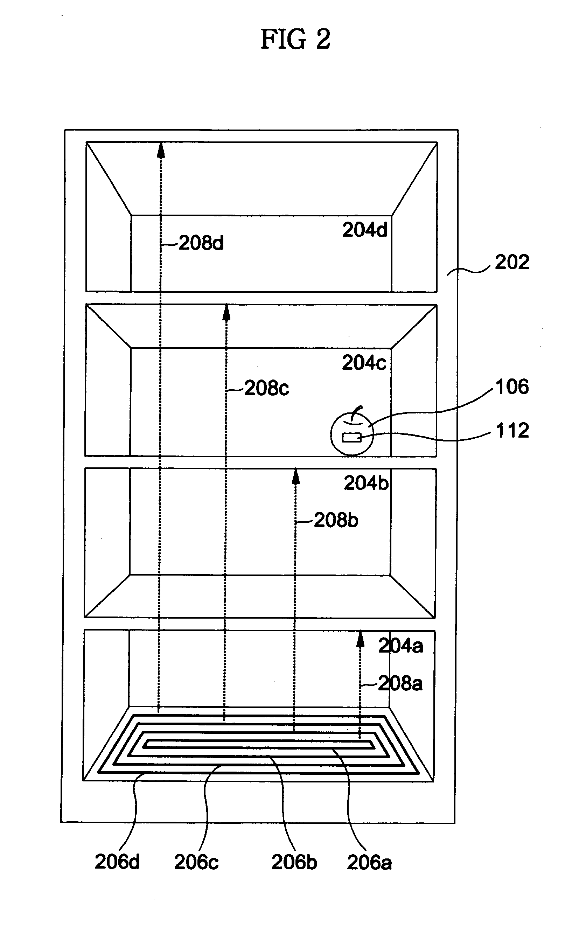

Referring to Figures 1 and 2, the refrigerator has a plurality of antennas 206a, ..., 206d, which are disposed at the bottom of a storage chamber 202 for reading the data contained in RFID tags 112 attached to items 106 stored in the storage chamber 202. The antennas 206a, ..., 206d are mounted below the top surface of the floor of the storage chamber 202 to prevent the antennas 206a, ..., 206d from being contaminated by foodstuffs or moisture.

As shown in Figure 2, the storage chamber 202 includes four storage cells 204a, ..., 204d. The antennas 206a, ..., 206d are mounted below the top surface of the floor of the first storage cell 204a, which is the lowest storage cell, for generating magnetic fields. The magnetic fields generated from the antennas 206a, ..., 206d are different from each other, since the antennas 206a, ..., 206d have different radiuses. As a result, the antennas 206a, ..., 206d have different RF signal transmission and reception ranges 208a, ..., 208d. The RF signal transmission and reception range 208a of the first antenna 206a, which has the smallest radius, is limited to the first storage cell 204a, i.e. within the distance from its floor to its ceiling. The RF signal transmission and reception range 208b of the second antenna 206b, which has a radius slightly larger than that of the first antenna 206a, extends from the floor of the first storage cell 204a to the ceiling of the second storage cell 204b. The RF signal transmission and reception range 208c of the third antenna 206c, which has a radius slightly larger than that of the second antenna 206b, extends from the floor of the first storage cell 204a to the ceiling of the third storage cell 204c. The RF signal transmission and reception range 208d of the fourth antenna 206d, which has the largest radius, extends from the floor of the first storage cell 204a to the ceiling of the fourth storage cell 204d.

In this refrigerator, no more than one antenna is required to identify tagged items in each storage cell. Thus, at most four antennas 206a, ..., 206d are used to identify and locate the items stored in the four storage cells 204a,..., 204d.

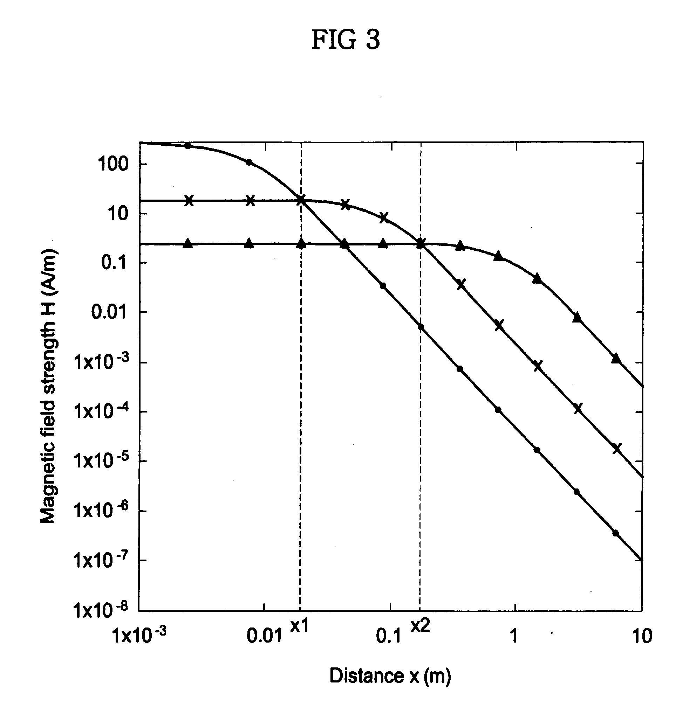

The fact that the four antennas 206a, ..., 206d have different RF signal transmission and reception ranges means that the ranges within which the antennas 206a, ..., 206d can identify the RFID tags 112 are different. The identification ranges are indicated by the lengths of the four arrows 208a, ..., 208d in Figure 2. When the antennas 206a, ..., 206d are coil antennas, the RF signal transmission and reception ranges, i.e. the RFID tag identification ranges, are determined by the radiuses of the antennas 206a, ..., 206d, which are shown in Figure 3.

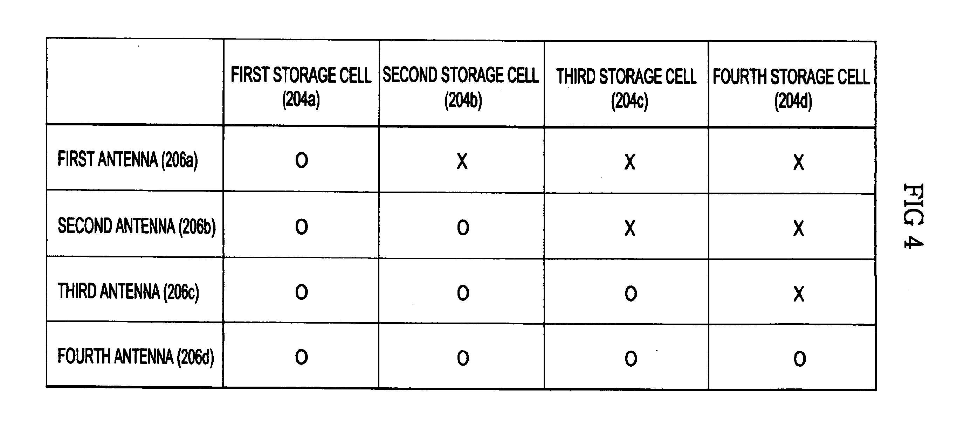

Referring to Figure 3, the graph illustrates magnetic field strength against distance for the antennas in a RFID system, and is taken from Figure 4.4 of RFID Handbook (Klaus Finkenzeller, 2004). It can be seen from Figure 3 that the magnetic field strengths are inversely proportional to the radiuses R of the antennas when the distance from the antennas are below a specified value X1. When the distance from the antennas is above a specified value X2, the magnetic field strengths are proportional to the radiuses R of the antennas. Specifically, the difference in radius of the antennas 206a, ..., 206d of Figure 2 causes the difference in magnetic field strength, which means that the RFID tag identification ranges of the antennas 206a, ..., 206d differ from each other. But, the magnetic field strengths proportional to the radiuses R of the antennas when the distance from the antennas is above the specified value X2. Consequently, the distances between the position where the antennas 206a, ..., 206d are mounted and the upper surface of the floor of the first storage cell 204a is above at least X2 in Figure 2.

Referring to Figures 2 and 4, the first antenna 206a is used for the first storage cell 204a only, the second antenna 206a is used for the first and second storage cells 204a, 204b, the third antenna 206c is used for the first to third storage cells 204a, ..., 204c and the fourth antenna 206d is used for the first to fourth storage cells 204a, ..., 204d.

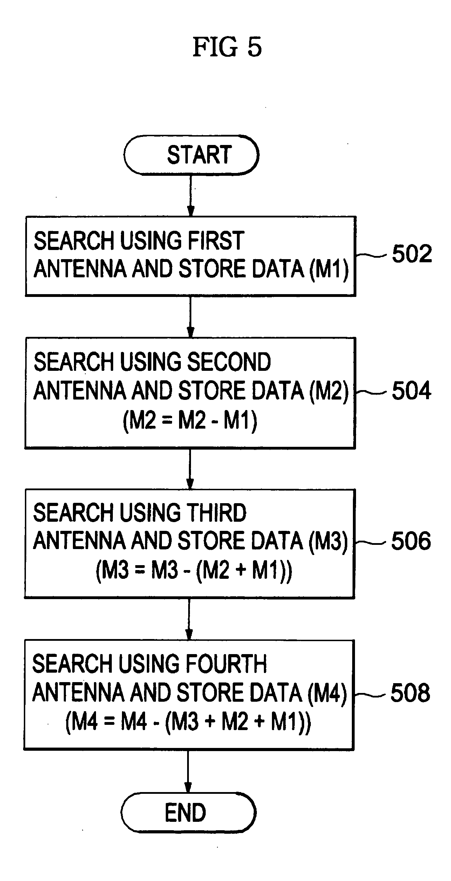

It can be seen from Figure 4 that, although the identification ranges of the four antennas 206a, ..., 206d are different from each other, the identification distances overlap, i.e. antennas with longer ranges cover the ranges of shorter range antennas. Therefore, the search results also overlap. For this reason, it is necessary to provide a control method for extracting information about the stored items for each storage cell from the combined search results of all of the antennas 206a, ..., 206d, which is illustrated in Figure 5.

Figure 5 is a flowchart illustrating a method of controlling a refrigerator according to an embodiment of the present invention. The method can be performed by the control system of the refrigerator of Figures 1 and 2 and is, for ease of explanation, will be described in conjunction with those figures. However, it is to be understood that other apparatuses may perform the method.

Referring to Figures 1, 2 and 5, a search is performed first using the first antenna 206a to collect first stored item-related data M1 and the collected first stored item-related data M1 is stored in the memory unit 110 (operation 502). The identification range of the first antenna 206a is limited to the first storage cell 204a. Consequently, the first stored item-related data M1 relates only to the items stored in the first storage cell 204a.

Next, another search is performed using the second antenna 206b to collect second stored item-related data M2 and the collected second stored item-related data M2 is stored in the memory unit 110 (operation 504). The second stored item-related data M2 relates to items stored in the first and second storage cells 204a, 204b. For this reason, the first stored item-related data M1 is subtracted from the second stored item-related data M2, to leave only the information about the items stored in the second storage cell 204b, and then the second stored item-related data M2', now containing no first stored item-related data M1, is stored in the memory unit 110 (M2' = M2 - M1).

After that, a search is performed using the third antenna 206c to collect third stored item-related data M3 and the collected third stored good-related data M3 is stored in the memory unit 110 (operation 506). In this case, the third stored good-related data M3 relates to the items stored in the first to third storage cells 204a, ..., 204c. For this reason, the first and second stored good-related data M1, M2' are subtracted from the third stored item-related data M3, to leave only information about the goods stored in the third storage cell 204c, and then the third stored good-related data M3', now containing no first and second stored item-related data M1 and M2, is stored in the memory unit 110 (M3' = M3 - (M2' + M1) = M3 - M2).

Finally, a search is performed using the fourth antenna 206d to collect fourth stored item-related data M4 and the collected fourth stored item-related data M4 is stored in the memory unit 110 (operation 508). The fourth stored item-related data M4 relates to the items stored in the first to fourth storage cells 204a, ..., 204d. For this reason, the first to third stored items-related data M1, M2', M3' are subtracted from the fourth stored item-related data M4, to leave only information about the items stored in the fourth storage cell 204d, and then the fourth stored item-related data M4', now containing no first to third stored item-related data M1, M2', M3' is stored in the memory unit 110 (M4' = M4 - (M3' + M2' + M1') = M4 - M3).

The first to fourth stored item-related data M1, M2', M3', M4', stored in the memory unit 110 by the above-described process, relates to the items stored respectively in the first to fourth storage cells 204a to 204d. Consequently, the storage cells, in which items, stored in the storage chamber 202, are stored, can be determined.

In the above-described embodiment of the present invention, the antennas 206a, ..., 206d are sequentially operated to search the storage cells 204, ..., 204d, although the antennas 206a, ..., 206d may be simultaneously operated, and then the difference between data collected by the respective antennas 206a, ..., 206d may be extracted to obtain stored item-related data for each storage cell.

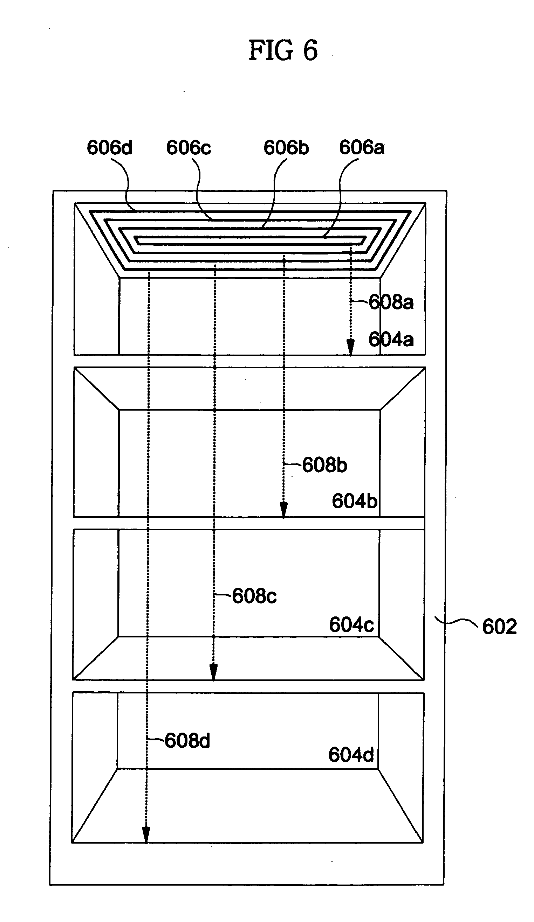

Referring to Figure 6, antennas 606a, ..., 606d are mounted above the ceiling of a storage chamber 602 of a refrigerator. As described above, the magnetic field strengths, produced by the antennas 606a, ..., 606d, are in proportion to the radiuses of the antennas 606a, ..., 606d when the distance from the antennas is above the specified value X2. Consequently, the distance between the position, where the antennas 606a, ..., 606d are mounted and the lower surface of the ceiling to the top storage cell is above X2.

As apparent from the above description, a small number of antennas are mounted to one end surface of the storage chamber formed in the refrigerator, instead of mounting a large number of antennas to each of the inner side surfaces of several divided storage cells of the storage chamber, such that basic information of goods stored in the storage cells is identified and the stored positions of the goods are searched. Consequently, the above-described embodiments of the present invention have the effect of reducing cells that the antennas occupy, thus decreasing the size of the refrigerator or increasing the capacity of the storage chamber, and reducing the manufacturing costs of the refrigerator.

## Claims

1. A refrigerator comprising a storage chamber (202) and electromagnetic tag reading means (102, 104) for reading tags (112) in the storage chamber (202), the tag reading means (102, 104) comprising a plurality of antennas (206a, ..., 206d), **characterised in that** the antennas (206a, ..., 206d) are collocated and have different, but overlapping operative ranges (208a, ..., 208d).

2. A refrigerator according to claim 1, wherein the tag reading means (102, 104) is an RFID tag reading means.

3. A refrigerator according to claim 1 or claim 2 wherein the antennas (206a,...206d) are arranged to generate magnetic fields having different respective strengths.

4. A refrigerator according to any one of claims 1, 2 or 3, wherein the tag reading means (102, 104) is configured to remove data obtained from a shorter range antenna (206a) from the data obtained from a longer range antenna (206b) so as to isolate data from a zone (204b) spaced from the antennas (206a, ..., 206d).

5. A refrigerator according to any preceding claim, wherein the antennas (206a, ..., 206d) are concentrically arranged coil or loop antennas (206a, ..., 206d), the outer antenna (206d) having the longest range (208d) and the inner antenna (206a) having the shortest range (208a).

6. A refrigerator according to any preceding claim, wherein the antennas (206a, ..., 206d) are mounted behind a wall surface of the storage chamber (202) by a distance (X2) such that listing the antennas in order the magnitudes of their magnetic field strengths at the same place, produces the same result wherever the magnetic field strengths are measured in the storage chamber (202).

7. A refrigerator according to any preceding claim in which the storage chamber (202) includes a plurality of storage cells (204a,...,204d).

8. A refrigerator according to claim 7 in which the operative ranges (208a,...208d) of the antennas (206a,...206d) are arranged to extend to the positions of respective storage cells (204a,...204d).

9. A refrigerator according to claim 8, comprising a control means (102) arranged to perform a control operation to sequentially operate the antennas (206a,...206d) either from the largest operative range antenna (206d) to the smallest operative range antenna (206a), or from the smallest operative range antenna (206a) to the largest operative range antenna (206d) when the control means (102) is arranged to control the reading means (104) to read the tags (112) in the storage chamber (202).

10. A refrigerator according to claim 8, comprising a control means (102) arranged to perform a control operation to simultaneously operate the antennas (206a,...,206d) when controlling the reading means (104) to read the tags (112) in the storage chamber (202).

11. A method of acquiring information from tags (112) in a storage chamber (202) of a refrigerator comprising reading the tags (112) using a plurality of collocated antennas (206a,... 206d) having different, but overlapping operative ranges (208a, ..., 208d) extending to different parts of the storage chamber (202), and comparing the results obtained by each antenna (206a,...206d).

12. A method according to claim 11, wherein the operating ranges of the antennas (208a,...208d) correspond to respective storage cells (204a,...204d) in the storage chamber (202).

13. A method according to claim 12, wherein the antennas (206a,...206d) are sequentially operated either from the largest operative range antenna (206d) to the smallest operative range antenna (206a) or from the smallest operative range antenna (206a) to the largest operative range antenna (206d).

14. A method according to claim 12, wherein the antennas (206a,...206d) are simultaneously operated to obtain information from the tags (112) in the storage chamber (102).

15. A method according to claims 13 in which information read by a second antenna (206c) is removed from the set of information read by a first antenna (206d) in order to determine the information corresponding to a tag (112) in a storage cell (204d) corresponding to the first antenna (206d).

## Patentansprüche

1. Kühlgerät aufweisend eine Aufbewahrungskammer (202) und ein Lesemittel für elektromagnetische Kennzeichnungen (102, 104) zum Lesen von Kennzeichnungen (112) in der Aufbewahrungskammer (202), wobei das Lesemittel für Kennzeichnungen (102, 104) eine Mehrzahl an Antennen (206a, ..., 206d) aufweist, **dadurch gekennzeichnet,**
**dass** die Antennen (206a, ..., 206d) zusammen angeordnet sind und unterschiedliche, jedoch überlappende Betriebsbereiche (208a, ..., 208d) aufweisen.

2. Kühlgerät nach Anspruch 1,
wobei das Lesemittel für Kennzeichnungen (102, 104) ein Lesemittel für RFID-Kennzeichnungen ist.

3. Kühlgerät nach Anspruch 1 oder 2,
wobei die Antennen (206a, ..., 206d) angeordnet sind, um elektromagnetische Felder mit unterschiedlichen jeweiligen Stärken zu erzeugen.

4. Kühlgerät nach einem der Ansprüche 1, 2 oder 3,
wobei das Lesemittel für Kennzeichnungen (102, 104) konfiguriert ist, um von einer Antenne mit kürzerem Bereich (206a) erhaltene Daten von den von einer Antenne mit längerem Bereich (206b) erhaltenen Daten zu entfernen, um Daten von einer von den Antennen (206a, ..., 206d) beabstandeten Zone (204b) zu isolieren.

5. Kühlgerät nach einem der vorangehenden Ansprüche,
wobei die Antennen (206a, ..., 206d) konzentrisch angeordnete Spulen- oder Schleifenantennen (206a, ..., 206d) sind, wobei die äußere Antenne (206d) den längsten Bereich (208d) und die innerste Antenne (206a) den kürzesten Bereich (208a) aufweist.

6. Kühlgerät nach einem der vorangehenden Ansprüche,
wobei die Antennen (206a, ..., 206d) hinter einer Wandoberfläche der Aufbewahrungskammer (202) mit einem derartigen Abstand (X2) angebracht sind, dass eine Auflistung der Antennen in Reihenfolge der Größe ihrer Magnetfeldstärken an der gleichen Stelle das gleiche Ergebnis erzeugt, egal wo die Magnetfeldstärken in der Aufbewahrungskammer (202) gemessen werden.

7. Kühlgerät nach einem der vorangehenden Ansprüche,
in welchem die Aufbewahrungskammer (202) eine Mehrzahl an Aufbewahrungszellen (204a, ..., 204d) aufweist.

8. Kühlgerät nach Anspruch 7,
in welchem die Betriebsbereiche (208a, ..., 208d) der Antennen (206a, ..., 206d) angeordnet sind, um sich zu den Positionen von jeweiligen Aufbewahrungszellen (204a, ..., 204d) zu erstrecken.

9. Kühlgerät nach Anspruch 8,
aufweisend ein Steuermittel (102), das zum Durchführen eines Steuervorgangs zum sequentiellen Betreiben der Antennen (206a, ..., 206d) entweder von der Antenne mit dem größten Betriebsbereich (206d) zur Antenne mit dem kleinsten Betriebsbereich (206a) oder von der Antenne mit dem kleinsten Betriebsbereich (206a) zur Antenne mit dem größten Betriebsbereich (206d) angeordnet ist, wenn das Steuermittel (102) zum Steuern des Lesemittels (104) zum Lesen der Kennzeichnungen (112) in der Aufbewahrungskammer (202) angeordnet ist.

10. Kühlgerät nach Anspruch 8,
aufweisend ein Steuermittel (102), das angeordnet ist, um einen Steuervorgang zum gleichzeitigen Betreiben der Antennen (206a, ..., 206d) durchzuführen, wenn das Lesemittel (104) zum Lesen der Kennzeichnungen (112) in der Aufbewahrungskammer (202) gesteuert wird.

11. Verfahren zum Erlangen von Informationen von Kennzeichnungen (112) in einer Aufbewahrungskammer (202) eines Kühlgeräts,
aufweisend das Lesen der Kennzeichnungen (112) unter Verwendung einer Mehrzahl an zusammen angeordneten Antennen (206a, ..., 206d) mit unterschiedlichen, jedoch überlappenden Betriebsbereichen (208a, ..., 208d), die sich zu unterschiedlichen Teilen der Aufbewahrungskammer (202) erstrecken und das Vergleichen der durch jede Antenne (206a, ..., 206d) erhaltenen Ergebnisse.

12. Verfahren nach Anspruch 11,
wobei die Betriebsbereiche der Antennen (208a, ..., 208d) jeweiligen Aufbewahrungszellen (204a, ..., 204d) in der Aufbewahrungskammer (202) entsprechen.

13. Verfahren nach Anspruch 12,
wobei die Antennen (206a, ..., 206d) entweder von der Antenne mit dem größten Betriebsbereich (206d) zur Antenne mit dem kleinsten Betriebsbereich (206a) oder von der Antenne mit dem kleinsten Betriebsbereich (206a) zur Antenne mit dem größten Betriebsbereich (206d) sequentiell betrieben werden.

14. Verfahren nach Anspruch 12,
wobei die Antennen (206a, ..., 206d) gleichzeitig betrieben werden, um Informationen von den Kennzeichnungen (112) in der Aufbewahrungskammer (102) zu erhalten.

15. Verfahren nach Anspruch 13,
in welchem durch eine zweite Antenne (206c) gelesene Informationen von dem Satz an durch eine erste Antenne (206d) gelesenen Informationen entfernt werden, um die Information zu bestimmen, die einer Kennzeichnung (112) in einer Aufbewahrungszelle (204d) entspricht, die der ersten Antenne (206d) entspricht.

## Revendications

1. Réfrigérateur comprenant un compartiment de stockage (202) et un moyen de lecture d'étiquette électromagnétique (102, 104) pour lire des étiquettes (112) dans le compartiment de stockage (202), le moyen de lecture d'étiquette (102, 104) comprenant une pluralité d'antennes (206a, ... 206d), **caractérisé en ce que** les antennes (206a, ..., 206d) sont contiguës et ont des portées opérationnelles différentes mais se chevauchant (208a, ..., 208d).

2. Réfrigérateur selon la revendication 1, dans lequel le moyen de lecture d'étiquette (102, 104) est un moyen de lecture d'étiquette RFID.

3. Réfrigérateur selon la revendication 1 ou la revendication 2, dans lequel les antennes (206a, ... 206d) sont prévues pour générer des champs magnétiques ayant des intensités respectives différentes.

4. Réfrigérateur selon l'une quelconque des revendications 1, 2 ou 3, dans lequel le moyen de lecture d'étiquettes (102, 104) est configuré pour supprimer des données obtenues d'une antenne ayant une portée plus courte (206a) des données obtenues d'une antenne ayant une portée plus longue (206b) de manière à isoler des données d'une zone (204b) espacée des antennes (206a,..., 206d).

5. Réfrigérateur selon l'une quelconque des revendications précédentes, dans lequel les antennes (206a, ..., 206d) sont des antennes bobinées ou des antennes cadre (206a, ..., 206d) disposées de manière concentrique, l'antenne extérieure (206d) ayant la portée la plus longue (208d) et l'antenne intérieure (206a) ayant la portée la plus courte (208a).

6. Réfrigérateur selon l'une quelconque des revendications précédentes, dans lequel les antennes (206a, ..., 206d) sont montées derrière la surface d'une paroi du compartiment de stockage (202) à une distance (X2) telle que le listage des antennes suivant l'ordre des importances de leurs intensités de champ magnétique en un même emplacement produit le même résultat où que les intensités de champ magnétique soient mesurées dans le compartiment de stockage (202).

7. Réfrigérateur selon l'une quelconque des revendications précédentes, dans lequel le compartiment de stockage (202) comprend une pluralité de cellules de stockage (204a...., 204d).

8. Réfrigérateur selon la revendication 7, dans lequel les portées opérationnelles (208a,.... 208d) des antennes (206a, ..., 206d) sont prévues pour atteindre les positions des cellules de stockage respectives (204a, ..., 204d).

9. Réfrigérateur selon la revendication 8, comprenant un moyen de commande (102) prévu pour exécuter une opération de commande pour faire fonctionner en séquence les antennes (206a, ..., 206d) soit de l'antenne ayant la portée opérationnelle la plus grande (206d) à l'antenne ayant la portée opérationnelle la plus petite (206a), soif de l'antenne ayant la portée opérationnelle la plus petite (206a) à l'antenne ayant la portée opérationnelle la plus grande (206d) lorsque le moyen de commande (102) est agencé pour commander les moyens de lecture (104) pour lire les étiquettes (112) dans le compartiment de stockage (202).

10. Réfrigérateur selon la revendication 8, comprenant un moyen de commande (102) agencé pour exécuter une opération de commande pour faire fonctionner simultanément les antennes (206a, ..., 206d) lors de la commande du moyen de lecture (104) pour lire les étiquettes (112) dans le compartiment de stockage (202).

11. Procédé d'acquisition d'informations à partir d'étiquettes (112) dans un compartiment de stockage (202) d'un réfrigérateur comprenant les étapes consistant à lire les étiquettes (112) à l'aide d'une pluralité d'antennes contiguës (206a, ..., 206d) ayant des portées opérationnelles différentes mais se chevauchant (208a, ..., 208d), s'étendant à des zones différentes du compartiment de stockage (202), et à comparer les résultats obtenus par chacune des antennes (206a, ..., 206d).

12. Procédé selon la revendication 11, dans lequel les portées opérationnelles des antennes (208a, ..., 208d) correspondent aux cellules de stockage respectives (204a, ..., 204d) dans le compartiment de stockage (202).

13. Procédé selon la revendication 12, dans lequel les antennes (206a, ..., 206d) sont activées en séquence, soit de l'antenne ayant la portée opérationnelle la p!us grande (206d) à l'antenne ayant la portée opérationnelle la plus petite (206a), soit de l'antenne ayant la portée opérationnelle la plus petite (206a) à l'antenne ayant la portée opérationnelle la plus grande (206d).

14. Procédé selon la revendication 12, dans lequel les antennes (206a, ..., 206d) sont activées simultanément pour obtenir des informations des étiquettes (112) dans le compartiment de stockage (202).

15. Procédé selon la revendication 13, dans lequel des informations lues par une seconde antenne (206e) sont supprimées du jeu d'informations lues par une première antenne (206d) de manière à déterminer les informations correspondant à une étiquette (112) dans une cellule de stockage (204d) correspondant à la première antenne (206d).
